# EUROPEAN PATENT SPECIFICATION

(11) **EP 2 955 115 B1**
(45) Date of publication and mention of the grant of the patent: **07.03.2018**
(21) Application number: 15171985.3
(22) Date of filing: 12.06.2015
(51) Int. Cl.: B65B 7/28, B65G 47/244

(54) **APPARATUS AND METHOD FOR CLOSING BOXES**
VORRICHTUNG UND VERFAHREN ZUM SCHLIESSEN VON SCHACHTELN
APPAREIL ET PROCÉDÉ DE FERMETURE DE BOÎTES

(30) Priority: 13.06.2014 IT UD20140103
(43) Date of publication of application: 16.12.2015
(73) Proprietor: Panotec SRL, 31010 Cimadolmo (IT)
(72) Inventor: Capoia, Giuseppe, 31010 Cimadolmo (TV) (IT)
(74) Representative: Maroscia, Antonio

(56) References cited:
- WO-A1-95/27671
- US-A- 3 927 505
- US-A- 3 976 241
- US-A- 4 085 839

## Description

### FIELD OF THE INVENTION

Forms of embodiment described here concern an apparatus and a method for closing boxes, that is, for connecting two or more sides of a lid to a respective container bottom.

In particular, forms of embodiment described here are applied in the field of making packages of objects for the automatic closing of boxes containing the objects by gluing and/or stapling the lid to the corresponding container bottom.

### BACKGROUND OF THE INVENTION

It is known to make packages of objects using packaging plants which, starting from blanks, or planar developments, of boxes or parts of boxes, allow to obtain each box ,or part of the box, by folding and gluing the blanks.

Known boxes each have a container bottom and a lid, the first with the function of containing the objects to be packaged and the second with the function of preventing the objects from coming out, and preserving them from damage or dirt.

Boxes are known, obtained starting from a single blank, in which the lid shares one of the edges with the container bottom, and boxes are also known obtained starting from two blanks, one defining the planar development of the container bottom, and the other defining the planar development of the lid.

In known packaging plants, it is provided to fill the container bottom with the objects it is to contain by performing one or more filling operations in succession, during which the lid is kept non-interfering with the container bottom, for example hinged open or separated from the bottom.

Finally, the package is completed by closing the box, gluing or mechanically connecting the lid, for example by stapling, onto the corresponding container bottom, and performing possible other operations to complete the package, for example finishing or sealing it.

Known packaging plants normally comprise a blank feed station, one or more blank folding and/or gluing stations, to make boxes or parts of boxes, keeping the corresponding container bottoms accessible from the outside, one or more subsequent filling stations, generally manual, for filling the boxes, and a station to complete the package by folding the lids and closing the boxes.

Normally, these stations are disposed in succession, along a working path, according to an in-line production logic. In this way, a direction of feed is defined in which the stations follow each other to perform the desired sequence of operations in the packaging process.

Known packaging plants generally comprise a package completion station in which an apparatus for closing the boxes connects, by gluing and/or stapling, one longitudinal side of the container bottom, disposed parallel to the direction of feed, to a longitudinal side of the lid.

The closing apparatus is configured to perform, after this connection, the connection by gluing and/or stapling of two transverse sides of the container bottom, disposed orthogonal to the direction of feed, to two transverse sides of the lid.

One disadvantage of known plants is that they are not very efficient in operation and are able to supply only limited productivity, or in any case production is penalized by the fact that the connection operations which determine the closing of the box require to interrupt the feed of the box in order to be performed.

At least the connection of the transverse sides is necessarily done when the box is stationary, to allow the closing apparatus to operate in the direction orthogonal to the direction of feed without making errors in the closing.

Documents US-A-3,976,2 41 and US-A-3,927,505 describe a method for forming, filling and closing cartons, which provides to make a carton by assembling a bottom blank and a lid, gluing two lateral panels of the lid to two respective lateral panels of the bottom blank and, subsequently rotating everything by 90°, to apply more adhesive. However, the rotation of the carton on itself is carried out when the assembled carton is stationary in the direction of feed, therefore to the detriment of the speed of production and overall productivity.

There is therefore a need to perfect an apparatus and method for closing boxes that can overcome at least one of the disadvantages of the state of the art.

In particular, purpose of the present invention is to obtain an apparatus and perfect a method for closing boxes that are efficient, that is, they are able to perform said closing correctly and at the same time rapidly and effectively, and which allow to obtain high productivity and to contain the overall, packaging times.

The Applicant has devised, tested and embodied the present invention to overcome the shortcomings of the state of the art and to obtain these and other purposes and advantages.

WO9527671 discloses an apparatus for rotating boxes advancing along a feed direction by one or more conveyors. The apparatus comprises a drive unit for moving a rotation device along a closed path parallel to the direction of feed of the boxes.

Moreover, the drive unit does not interrupt the driving of the rotation device when each of the boxes has been rotated.

US4085839 discloses an apparatus for conveying boxes which comprises a stationary bumper inclined with respect to the feeding direction of the boxes and a pair of belts running in a direction parallel to the feed direction of the boxes.

These solution have the disadvantage that they would not allow the correct positioning of the boxes during their advancement and rotation thereof on the conveyors without reducing their productivity.

### SUMMARY OF THE INVENTION

The present invention is set forth and characterized in the independent claims, while the dependent claims describe other characteristics of the invention or variants to the main inventive idea.

Forms of embodiment described here concern an apparatus usable for closing boxes, in which each box is provided with a container bottom and a lid, each with a plurality of lateral walls.

In accordance with one form of embodiment, the closing apparatus comprises one or more conveyors configured to determine a continuous feed of the boxes in a direction of feed, and at least a first closing device for the connection of at least one of first lateral walls of the container bottom with at least one of first lateral walls of the lid.

The first lateral walls, in correspondence to the first closing device, are located substantially parallel to the direction of feed of the boxes.

In accordance with one aspect of the present invention, downstream of the first closing device and disposed in succession in the direction of feed, the apparatus comprises:
- a rotation device configured to rotate the boxes on the fly while they are moving in the direction of feed, determining, in cooperation with the one or more conveyors, a roto-translation of the boxes in the direction of feed, and to dispose second lateral walls of the container bottom and of the lid, adjacent and contiguous to the first lateral walls, parallel to the direction of feed, and
- a second closing device for the connection of at least one of the second lateral walls of the container bottom with at least one of the second lateral walls of the lid.

In this way, due to the effect of the intermediate rotation, it is possible to carry out the first partial closing and the subsequent second complete closing keeping the boxes constantly moved in the direction of feed. This confers continuity to the closing process and allows to obtain greater productivity, reducing and optimizing the process times.

Advantageously, moreover, the apparatus allows to carry out the rotation while the boxes advance continuously thanks to the conveyors, that is, it allows to roto-translate the boxes, preventing downtimes caused by stoppages of the boxes, and therefore promoting production speed and increasing productivity overall.

The present invention also concerns a plant for packaging objects in boxes, comprising at least a production line provided with one or more filling stations in which objects are inserted into container bottoms of the boxes and, along the production line and downstream of the filling stations, a station to complete the packages comprising at least a closing apparatus as indicated above.

According to aspects of the present invention, a method for closing boxes, each provided with a container bottom and a lid, comprises feeding the container bottom and the lid in a direction of feed and at least a first partial closing of the box during which first lateral walls of the container bottom and of the lid, disposed parallel to the direction of feed, are connected to each other.

According to one aspect of the present invention, the method comprises a rotation on the fly of the box, performed subsequent to the first partial closing and in line in the direction of feed while the box advances, determining a roto-translation of the box in the direction of feed, during which rotation second lateral walls of the container bottom and the lid, adjacent and contiguous to the first walls, are positioned parallel to the direction of feed, and a second closing of the box performed in line in the direction of feed and after the rotation in order to connect at least some of the second lateral walls.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic plan view of forms of embodiment of an apparatus according to the present invention as part of a packaging plant;
- figs. 2 and 3 are three-dimensional views of forms of embodiment of a box;
- figs. 4 and 5 are variants respectively of fig. 2 and fig. 3;
- figs. 6a to 6g are plan views of the apparatus of fig. 1 in subsequent functioning moments.

In the following description, the same reference numbers indicate identical parts of the apparatus for closing boxes according to the present invention, also in different forms of embodiment. It is understood that elements and characteristics of one form of embodiment can be conveniently incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

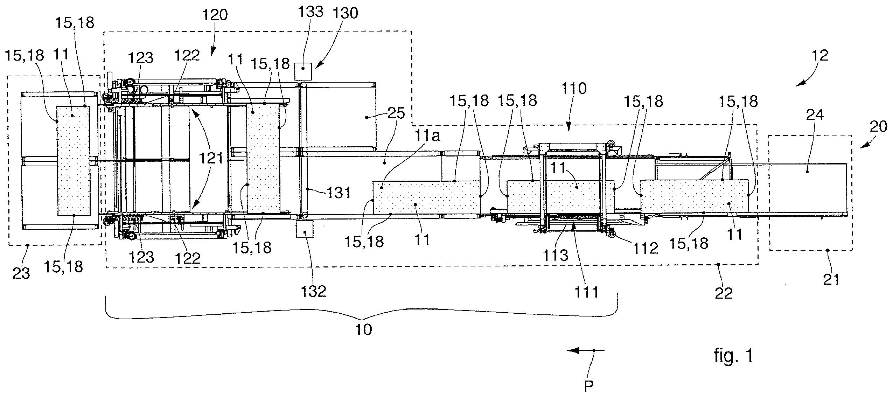

Fig. 1 is used to describe example forms of embodiment of an apparatus 10 for closing boxes 11, in this case used as part of a packaging plant 12 to obtain packages of objects contained in the boxes 11.

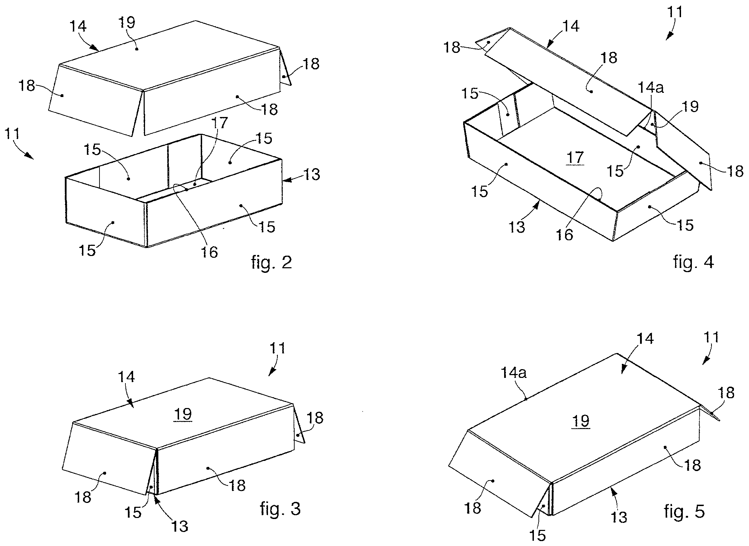

The boxes 11, described by way of example with reference to figs 2 to 5, include a container bottom 13 and a lid 14.

The apparatus 10 is configured for the connection, for example by gluing and/or stapling, of the lid 14 to the container bottom 13.

Hereafter in the description we shall refer explicitly only to gluing operations: this is intended to provide, merely by way of example, a possible type of connection of the elements indicated above. However, other possible solutions are not excluded, for example in which stapling operations are carried out, or combined operations of gluing and stapling.

The container bottom 13 includes a plurality of lateral walls 15 delimiting peripherally a containing compartment 16 and a bottom wall 17, which shares an edge with each of the lateral walls 15 and on which the objects to be packaged rest.

The lid 14 includes a plurality of lateral walls 18 located peripherally around a covering wall 19, with which each have an edge in common.

In the closed condition of the box 11, each of the lateral walls 18 of the lid 14 is connected to one of the lateral walls 15 of the container bottom 13, thus achieving the closing of the box 11.

Figs. 2 and 3 are used to describe possible solutions of a box 11 in which the container bottom 13 and the lid 14 are separate and distinct, for example if they are obtained starting from different blanks.

The blanks can be sheets of packaging material, such as smooth or corrugated cardboard, or polymer plastic materials such as for example, polypropylene (PP) or polyethylene terephthalate (PET), but without excluding other materials with comparable characteristics of rigidity.

In variant forms of the box 11, described with reference to figs. 4 and 5, the container bottom 13 and the lid 14 can be made from one single blank in which the lid 14 has a hinging edge 14a in common with one of the lateral walls 15 of the container bottom 13. In these variant forms, the lid 14 remains hinged to the container bottom 13 after the blank has been folded.

With reference to fig. 1, the packaging plant 12 is configured to produce the packages according to an in-line production logic, that is, carrying out in series a plurality of consecutive operations, and has at least one production line 20, shown only partly in fig. 1 with the parts thereof that are functional to the present description.

The production line 20 defines an operative flow according to a direction of feed P, along which operating stations follow one after the other, each dedicated to one or more of the above operations.

In some forms of embodiment, the packaging plant 12 can include one or more filling stations 21 and a station 22 to complete the packages, located downstream of the one or more filling stations 21 in the direction of feed P.

In possible implementations, the manual discharge of the boxes 11 can be provided, or the automatic discharge in a discharge station 23 of the packaging plant 12 located downstream of the station 22 to complete the packages in the direction of feed P.

The apparatus 10 can include one or more conveyors 24, 25 configured to determine a continuous feed of the boxes 11 in a direction of feed P, like the container bottom 13 and the lid 14 in the direction of feed P, or a direction parallel to it.

The movement of the boxes along the production line 20 can be carried out by the one or more conveyors 24, 25, for example of the belt type, aligned in the direction of feed P.

The conveyors 24, 25 can be synchronized to impart the same speed of feed to the boxes 11, or a differentiated drive of the conveyors 24, 25 can be provided, depending on the need to vary the speed of feed of the boxes 11 as a function of the position along the production line 20.

The drive of the conveyors 24, 25 is in any case intended to obtain a substantial continuity in the feed of the boxes 11 in the direction of feed P.

Advantageously, the apparatus 10 can include a pair of conveyors 25 paired in parallel and configured to act in synchrony, defining overall a bigger feed plane, able to support the boxes 11 as they roto-translate in the direction of feed P, as described in detail hereafter. Indeed, each box 11 can have a different width and length from each other and, moreover, different from the width of a conveyor 25. Therefore, since the box 11 can be made to rotate between an orientation in which the greater length of the box is oriented longitudinally along the conveyor 25, and an orientation in which the greater length of the box is oriented transversely to the conveyor 25, the presence of two conveyors 25 paired and synchronized allows to maintain the box 11 stably supported in any case, even when it is rotated.

In the filling stations 21 the objects that have to be packaged are inserted inside the containing compartment 16 of each container bottom 13 up to a desired filling of the latter.

The apparatus 10 for closing boxes 11 can be included in the station 22 to complete the packages and can be configured to receive from the last of the filling stations 21 the boxes 11 with the container bottoms 13 filled.

In possible implementations, the container bottoms 13 of the boxes 11, made as described with reference to figs. 2 and 3, are kept separate from the corresponding lids 14 until filling is finished, after which it can be provided to put a lid 14 on each container bottom 13 and to transfer the box 11 thus obtained to the apparatus 10 for closing.

Other implementations can provide that the lids 14 of the boxes 11, made as described with reference to figs. 4 and 5, are lowered onto the respective container bottoms 13 at the end of filling, making them rotate around the hinging edge 14a and that subsequently the box 11 thus obtained is transferred to the apparatus 10 for closing.

To this purpose, the apparatus 10 comprises a first closing device 110, configured to connect, for each box 11, at least a first lateral wall 18 of the lid 14 to a corresponding first lateral wall 15 of the container bottom 13.

The apparatus 10 also comprises a second closing device 120, configured to connect at least a second lateral wall 18 of the lid 14 to a corresponding second lateral wall 15 of the container bottom 13. The second lateral walls 18, 15 of the lid 14 and of the container bottom 13 are adjacent and contiguous to the first lateral walls 18, 15 respectively of the lid 14 and the container bottom 13.

The apparatus 10 also includes a rotation device 130, interposed between the first closing device 110 and the second closing device 120 and configured to rotate each box 11 on the fly from an initial position in which the first lateral walls 18, 15 are parallel to the direction of feed P, to a final position in which the second lateral walls 18 and 15 are parallel to the direction of feed P.

For example, possible solutions can provide that the rotation device 130 rotates the boxes 11 by about 90°.

It can be provided that the rotation device 130 is configured to perform a roto-translation of the boxes 11, combining a rotation on a plane parallel to the lying plane of the boxes 11 and a translation along the direction of feed P.

In possible solutions the first closing device 110, the rotation device 130 and the second connection device 120 are disposed in succession one after the other, aligned in the direction of feed P.

In some forms of embodiment, the first closing device 110 and the second closing device 120 respectively include at least a first connection unit 111 aligned with the direction of feed P, and at least a second connection unit 121, also aligned with the direction of feed P.

According to possible solutions, the first connection unit 111 can include first gluing members 112 aligned with the direction of feed P, and first pressing members 113, positioned downstream of the first gluing members 112 in the direction of feed P and substantially aligned therewith.

In the same way, it can also be provided that the second connection unit 121 includes second gluing members 122 aligned with the direction of feed P, and second pressing members 123, positioned downstream of the second gluing members 122 in the direction of feed P and substantially aligned therewith.

In some forms of embodiment, which can be combined with all the forms of embodiment described here, it can be provided that at least one of either the first closing device 110 or the second closing device 120 is provided with pairs of connection units 111 and respectively 121, opposite each other in a transverse direction to the direction of feed P and reciprocally parallel.

In possible implementations, the gluing members 112, 122 can be defined for example by spraying lances or nozzles, or rolls or other spreading tools, while the pressing members 113, 123 can be defined for example by rolls or bars, suitably shaped and located laterally to the transport conveyors 24, 25 of the boxes 11.

In possible solutions, it can be provided that the first gluing members 112 deposit the adhesive material on the external surface of one or more of the first lateral walls 15 of the container bottom 13, parallel to the direction of feed P.

Subsequently, it can be provided that the first pressing members 113 exert a pressure on one or more corresponding first lateral walls 18 of the lid 14 parallel to the direction of feed P against the first lateral walls 15 to make them adhere to the latter due to the presence of the adhesive material.

The alignment of the first gluing members 112 and the first pressing members 113 to the direction of feed P allows to make the connection between the first lateral walls 15 and 18 without needing to interrupt the feed of the box 11.

Afterward, the partly closed box 11 is transferred, for example by one or more conveyors 25, along the production line 20 from the first closing device 110 to the rotation device 130. Advantageously, in possible variants, as we said, two conveyors 25 in a pair can be provided for this purpose, disposed in parallel and drivable in synchrony in the direction of feed P and in a direction parallel thereto, which make the box 11 advance and support it as it roto-translates, and which can make the boxes 11 advance even after the roto-translation has been completed, toward the second closing device 120.

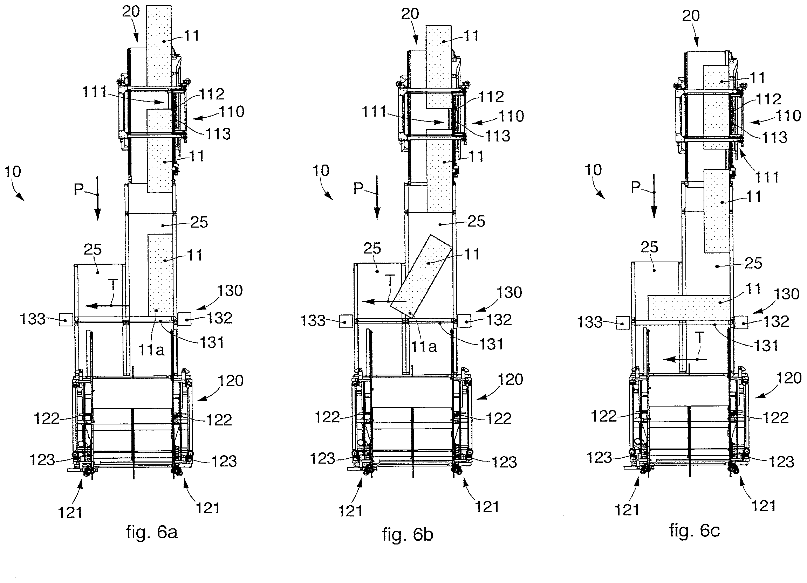

In some forms of embodiment, the rotation device 130 can include a transverse rotation member configured to contact the boxes 11 and make at least one front portion 11a of the boxes 11 perform a roto-translation in a direction of movement T, transverse to the direction of feed P (figs. 6a, 6b and 6c).

The roto-translated boxes 11 are then substantially diverted by the rotation device 130 in the direction of movement T. In this way, the boxes 11 are made to rotate on the fly while they are advancing in the direction of feed P. This solution, in which the boxes 11 are made to rotate as they advance, that is, without stopping, allows to increase production speeds and hence, in general, to increase productivity, preventing downtimes caused by stoppages needed, in the state of the art, to rotate the carton on itself when stationary.

Example forms of embodiment, described with reference to figs. 1 and 6a-6g, can provide that the rotation device 130 includes a belt-type diverter 131 disposed transverse to the production line 20.

The belt-type diverter 131 can be driven by a drive unit 132 which keeps it in movement in the direction of movement T, in this case orthogonal to the direction of feed P.

Fig. 6a is used to describe an initial moment of the rotation process, in which the front portion 11a of the box 11 comes into contact with the belt-type diverter 131 of the rotation device 130.

The front portion 11a of the box 11 is kept in contact with the belt-type diverter 131 due to the thrust exerted thereon by the conveyor 25 located in the direction of feed P. This contact allows the belt-type diverter 131 to draw the box 11 in its direction of movement T transversely to the direction of feed P.

Moments after said drawing action are described with reference to figs. 6b and 6c, where the latter in particular shows the moment when the rotation of the box 11 is concluded, when the second lateral walls 18 and 15 of the lid 14 and the container bottom 13 of the box 11 are parallel to the direction of feed P, in the final position of the box 11.

Once the box 11 has reached the final position, the drive unit 132 interrupts the drive of the belt-type diverter 131 and consequently its drawing action on the box 11.

The box 11 is thus moved in the direction of feed P only by the conveyors 25.

It can be provided that the rotation device 130 also includes a movement module 133 associated to the belt-type diverter 131 to move it with respect to the conveyors 25, for example in the direction of feed P to assist the thrust on the box 11.

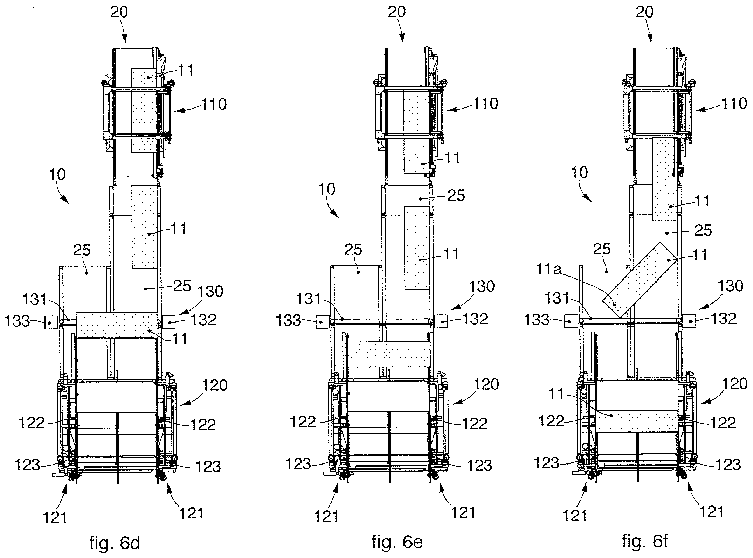

Fig. 6d is used to describe possible solutions in which the movement module 133 is configured to move the belt-type diverter 131 along a plane orthogonal to the conveyors 25, to dis-engage the box 11 at the end of rotation and to prevent any obstacle to its movement toward the second closing device 120.

For example, the belt-type diverter 131 can be lowered below the lying plane of the conveyors 25 to allow the undisturbed movement of the box 11 in the direction of movement P.

The box 11 therefore, in its passage from the first closing device 110 to the second closing device 120, is subjected to a roto-translation, defined by the combination of the translation in the direction of movement T caused by the belt-type diverter 131, and the translation in the direction of feed P caused by the conveyors 25.

In this way the advantage is obtained of being able to carry out the complete closure of the box 11 without ever interrupting its movement along the production line 20 in the direction of feed P.

The continuous movement of the boxes 11 therefore allows to obtain high productivity, since the steps of suspending the feed of the boxes 11, as happens in the state of the art, are eliminated, and the closing process is made quicker and more effective.

Figs. 6e and 6f are used to describe example forms of embodiment of the closing apparatus 10 in which the disposition and configuration of the first closing device 110, the rotation device 130 and the second closing device 120 allow to process three boxes 11 simultaneously, all without interrupting the feed in the direction of movement P.

Indeed it can be provided that, simultaneously, a first box 11 is glued in the second closing device 120, a second box 11, upstream of the first box 11 in the direction of feed P, is rotated in the rotation device 130, and a third box 11, upstream of the second box 11, is glued in the first closing device 110.

In this way, thanks to the apparatus 10, an incessant work flow is obtained, homogeneous and coordinated, along the production line 20 of the packaging plant 12.

It is clear that modifications and/or additions of parts may be made to the apparatus 10 and method for closing boxes as described heretofore, without departing from the field and scope of the present invention.

For example, it can be provided that, instead of including a belt-type diverter 131, the rotation device 130 includes a rotating platform configured to rotate on a lying plane parallel to the plane of the conveyors 25.

Other forms of embodiment can provide, instead of the belt-type diverter 131, a linear actuator with a transverse action in the direction of movement T, configured to thrust one end of each box 11 to determine the rotation thereof.

According to possible solutions, instead of the belt-type diverter 131, two linear actuators can be provided, distanced in the direction of movement P and acting in the same direction of movement T but in opposite senses, to determine a rotation torque on the boxes 11.

In possible forms of embodiment, the rotation device 130 can be defined by a robotized manipulator.

In other forms of embodiment the rotation device 130 can comprise a rotating table on which the box 11 is disposed and rotated.

It is also clear that, although the present invention has been described with reference to some specific examples, a person of skill in the art shall certainly be able to achieve many other equivalent forms of apparatus and method for closing boxes, having the characteristics as set forth in the claims and hence all coming within the field of protection defined thereby.

## Claims

1. Apparatus for closing boxes (11), each provided with a container bottom (13) and a lid (14), said apparatus comprising one or more conveyors (24, 25) configured to determine a continuous feed of said boxes (11) in a direction of feed (P), at least one first closing device (110) for the connection of at least one of first lateral walls (15) of said container bottom (13) with at least one of first lateral walls (18) of said lid (14), said first lateral walls (15, 18) being located substantially parallel to said direction of feed (P) of said boxes (11), wherein, downstream of said first closing device (110), and disposed in succession along said direction of feed (P), it comprises:
- a rotation device (130) configured to rotate said boxes (11) and to dispose second lateral walls (15, 18) of said container bottom (13) and of said lid (14), adjacent and contiguous to said first lateral walls (15, 18), parallel to said direction of feed (P), and
- a second closing device (120) for the connection of at least one of said second lateral walls (15) of said container bottom (13) with at least one of said second lateral walls (18) of said lid (14);
**characterized in that** said rotation device (130) is configured to rotate the boxes (11) on the fly while they are moving in said direction of feed (P) and to determine, in cooperation with said one or more conveyors (24, 25), a roto-translation of said boxes (11) in said direction of feed (P), said rotation device (130) comprising a belt-type diverter (131) disposed transversely with respect to said direction of feed (P) and said one or more conveyors (24, 25) and configured to contact said boxes (11) and to divert them in a direction of movement (T) transverse with respect to said direction of feed (P), a drive unit (132) being provided to drive said diverter (131), to move it in said movement direction (T) and to interrupt the driving action once each of said boxes (11) has reached its final position.

2. Apparatus as in claim 1, **characterized in that** said first closing device (110) comprises at least a first connection unit (111) aligned to said direction of feed (P) for the connection of the first lateral walls (15, 18) of said lid (14) and of said container bottom (13) and said second closing device (120) comprises at least a second connection unit (121) aligned to said direction of feed (P) for the connection of the second lateral walls (18) of said lid (14) and of said container bottom (13), in order to complete the closing of each of said boxes (11).

3. Apparatus as in claim 2, **characterized in that** at least one of either said first closing device (110) or said second closing device (120) comprises one or more pairs of respective first connection units (111) and second connection units (121) located in an opposite position with respect to said direction of feed (P) and reciprocally parallel thereto.

4. Apparatus as in any claim hereinbefore, **characterized in that** it comprises a pair of conveyors (25) disposed paired and in parallel in said direction of feed (P) and able to feed and support said boxes (11) while roto-translating.

5. Plant to package objects into boxes (11) comprising at least a production line (20) provided with one or more filling stations (21) in which objects are inserted into container bottoms (13) of said boxes (11), **characterized in that**, along said production line (20) and downstream of said filling stations (21), it comprises at least a closing apparatus (10) as in any claim hereinbefore.

6. Method for closing boxes (11), each provided with a container bottom (13) and a lid (14), comprising the feed of said container bottom (13) and said lid (14) in a direction of feed (P) and at least a first partial closing of said box (11) during which first lateral walls (15, 18) of said container bottom (13) and of said lid (14), disposed parallel to the direction of feed (P), are connected to each other, wherein the method comprises a rotation of the box (11) performed subsequent to said first partial closing, during which rotation second lateral walls (15, 18) of said container bottom (13) and said lid (14), adjacent and contiguous to said first walls (15, 18), are positioned parallel to the direction of feed (P), and a second closing of the box (11) performed in line in the direction of feed (P) and after said rotation in order to connect at least some of said second lateral walls (15,18);
**characterized in that** the rotation of the box (11) is performed on the fly and in line with the direction of feed (P) while the box (11) is advancing to cause a roto-translation of said box (11) in said direction of feed (P), the rotation of said box (11) being carried out to translate at least one front portion (11a) of said box (11) by a belt-type diverter (131) in a direction of movement (T) transverse with respect to said direction of feed (P) and at the same time to maintain the feed of said box (11) in said direction of feed (P) by one or more conveyors (24, 25), the driving action of the diverter (131) being interrupted once each of said boxes (11) has reached its final position.

7. Method as in claim 6, **characterized in that** said first partial closing comprises connecting at least a first wall (18) of said lid (14) to a corresponding first wall (15) of said container bottom (13), and **in that** said second closing comprises connecting at least a second wall (18) of said lid (14) to a corresponding second wall (15) of said container bottom (13).

8. Method as in claim 6 or 7, **characterized in that** rotating said box (11) provides to combine a rotation of said box (11) on its own lying plane and a translation of said box (11) in the direction of the feed (P).

## Patentansprüche

1. Vorrichtung zum Schließen von Schachteln (11), jeweils ausgestattet mit einem Behälterboden (13) und einem Deckel (14), wobei besagte Vorrichtung eine oder mehrere Förderanlagen (24, 25) aufweist, die so konfiguriert sind, dass sie eine kontinuierliche Zufuhr der besagten Schachteln (11) in einer Zufuhrrichtung (P) bewirken, zumindest einer ersten Schließvorrichtung (110) für die Verbindung von zumindest einer der ersten Seitenwände (15) des besagten Behälterbodens (13) mit zumindest einer der ersten Seitenwände (18) des besagten Deckels (14), wobei sich die besagten ersten Seitenwände (15, 18) im Wesentlichen parallel zur Zufuhrrichtung (P) der besagten Schachteln (11) befinden, welche, der besagten ersten Schließvorrichtung (110) nachgeschaltet in der besagten Zufuhrrichtung (P), bestehend aus:
- eine Rotationsvorrichtung (130), konfiguriert zur Rotation der besagten Schachteln (11) und zur Anordnung der zweiten Seitenwände (15, 18) des besagten Behälterbodens (13) und des besagten Deckels (14), angrenzend an die besagten ersten Seitenwände (15, 18), parallel zur besagten Zufuhrrichtung (P), und
- eine zweite Schließvorrichtung (120) zur Verbindung von zumindest einer der besagten zweiten Seitenwände (15) des besagten Behälterbodens (13) mit zumindest einer der besagten zweiten Seitenwände (18) des besagten Deckels (14);
**dadurch gekennzeichnet, dass** die besagte Rotationsvorrichtung (130) konfiguriert ist zur Rotation der in Zufuhrrichtung (P) durchlaufenden Schachteln (11) und zur Bewirkung, in Zusammenarbeit mit besagten einer oder mehreren Förderanlagen (24, 25), einer Rotations- und Translationsbewegung der besagten Schachteln (11) in Zufuhrrichtung (P), wobei besagte Rotationsvorrichtung (130) eine Umlenkung (131) mit Riemen in Querrichtung zur besagten Zufuhrrichtung (P) und besagten eine oder mehrere Förderanlagen (24, 25) aufweist und konfiguriert ist für den Kontakt mit besagten Schachteln (11) und zur Umlenkung derselben in eine Bewegungsrichtung (T) quer zur besagten Zufuhrrichtung (P), eine Antriebseinheit (132) für den Antrieb der besagten Umlenkung (131), für die Bewegung in der besagten Bewegungsrichtung (T) und zur Unterbrechung der Antriebswirkung, wenn die besagten Schachteln (11) ihre Endposition erreichen.

2. Vorrichtung gemäß Anspruch 1, **dadurch gekennzeichnet, dass** die besagte erste Schließvorrichtung (110) zumindest eine erste Verbindungseinheit (111) aufweist, ausgerichtet mit der besagten Zufuhrrichtung (P) zur Verbindung der ersten Seitenwände (15, 18) des besagten Deckels (14) und des besagten Behälterbodens (13), und dass die besagte zweite Schließvorrichtung (120) zumindest eine zweite Verbindungseinheit (121) aufweist, ausgerichtet mit der besagten Zufuhrrichtung (P) zur Verbindung der besagten zweiten Seitenwände (18) des besagten Deckels (14) und des besagten Behälterbodens (13), zum Abschließen der Schließung der besagten Schachteln (11).

3. Vorrichtung gemäß Anspruch 2, **dadurch gekennzeichnet, dass** zumindest eine der besagten ersten Schließvorrichtung (110) oder der besagten zweiten Schließvorrichtung (120) ein oder mehrere Paare von jeweils ersten Verbindungseinheiten (111) und zweiten Verbindungseinheiten (121) aufweist, in Gegenposition zur besagten Zufuhrrichtung (P) und jeweils parallel zu ihr.

4. Vorrichtung gemäß einem beliebigen der vorausgehenden Ansprüche, **dadurch gekennzeichnet, dass** sie ein paar von Förderanlagen (25) aufweist, gepaart und parallel ausgerichtet zur besagten Zufuhrrichtung (P) und geeignet zur Zufuhr und Abstützung der besagten Schachteln (11) während der Rotations- und Translationsbewegung.

5. Anlage zur Verpackung von Gegenständen in Schachteln (11), ausgestattet mit zumindest einer Produktionsanlage (20), ausgestattet mit einer oder mehreren Abfüllstationen (21), in denen Gegenstände in die Behälterböden (13) der besagten Schachteln (11) eingeführt werden, **dadurch gekennzeichnet, dass** sie entlang der besagten Produktionsanlage (20) und den besagten Abfüllstationen (21) nachgeschaltet zumindest eine Schließvorrichtung (10) gemäß den vorausgehenden Ansprüchen aufweist.

6. Verfahren zum Schließen von Schachteln (11), jeweils ausgestattet mit einem Behälterboden (13) und einem Deckel (14), ausgestattet mit der Zufuhr des besagten Behälterbodens (13) und des besagten Deckels (14) in Zufuhrrichtung (P) und zumindest einer ersten partiellen Schließung der besagten Schachtel (11), während der die ersten Seitenwände (15, 18) des besagten Behälterbodens (13) und des besagten Deckels (14), die parallel zur Zufuhrrichtung (P) angeordnet sind, miteinander verbunden werden, wobei das Verfahren eine Rotation der Schachtel (11) umfasst, ausgeführt nach der besagten ersten partiellen Schließung, während der Rotation der zweiten Seitenwände (15, 18) des besagten Behälterbodens (13) und des besagten Deckels (14), angrenzend an die besagten ersten Wände (15, 18) parallel zur Zufuhrrichtung (P), und einer zweiten Schließung der Schachtel (11), ausgeführt in Richtung der Zufuhrrichtung (P) und nach der besagten Rotation zur Verbindung von zumindest einer der besagten zweiten Seitenwände (15, 18);
**dadurch gekennzeichnet, dass** die Rotation der Schachtel (11) während des Durchlaufens in Zufuhrrichtung (P) ausgeführt wird, während sich die Schachtel (11) vorbewegt, um eine Rotations- und Translationsbewegung der besagten Schachtel (11) in der besagten Zufuhrrichtung (P) auszuführen, wobei die Rotation der besagten Schachtel (11) ausgeführt wird, um zumindest den vorderen Teil (11a) der besagten Schachtel (11) durch eine Umlenkung (131) mit Riemen in eine Bewegungsrichtung (T) quer zur besagten Zufuhrrichtung (P) umzulenken und gleichzeitig die Zufuhr der besagten Schachteln (11) durch eine oder mehrere Förderanlagen (24, 25) in der besagten Zufuhrrichtung (P) zu halten, wobei die Antriebswirkung der Umlenkung (131) unterbrochen wird, wenn die besagten Schachteln (11) ihre Endposition erreichen.

7. Verfahren gemäß Anspruch 6, **dadurch gekennzeichnet, dass** die besagte erste partielle Schließung die Verbindung von zumindest einer ersten Wand (18) des besagten Deckels (14) mit einer entsprechenden ersten Wand (15) des besagten Behälterbodens (13) umfasst, und dadurch, dass die besagte zweite Schließung die Verbindung von zumindest einer zweiten Wand (18) des besagten Deckels (14) mit einer entsprechenden zweiten Wand (15) des besagten Behälterbodens (13) umfasst.

8. Verfahren gemäß Anspruch 6 oder 7, **dadurch gekennzeichnet, dass** die Rotation der besagten Schachtel (11) eine kombinierte Rotation der besagten Schachtel (11) um ihre eigene Auflagefläche, sowie eine Translation der besagten Schachtel (11) in Zufuhrrichtung (P) bewirkt.

## Revendications

1. Appareil pour la fermeture de boîtes (11), chacune munie d'un fond de récipient (13) et d'un couvercle (14), ledit appareil comprenant un ou plusieurs transporteurs (24,25) conçus pour déterminer une avance continue desdites boîtes (11) dans une direction d'avance (P), au moins un premier dispositif de fermeture (110) pour relier au moins une des premières parois latérales (15) dudit fond de récipient (13) avec au moins une des premières parois latérales (18) dudit couvercle (14), lesdites premières parois latérales (15, 18) étant situées sensiblement parallèles à ladite direction d'avance(P) desdites boîtes (11), dans lequel, en aval dudit premier dispositif de fermeture (110), et en succession le long de ladite direction d'avance (P), il comprend :
- un dispositif rotatif (130) conçu pour tourner lesdites boîtes (11) et pour disposer des secondes parois latérales (15, 18) dudit fond de récipient (13) et dudit récipient (14), en position adjacente et contiguë aux dites premières parois latérales (15, 18), parallèles à ladite direction d'avance (P), et
- un second dispositif de fermeture (120) pour relier au moins l'une desdites secondes parois latérales (15) dudit fond de récipient (13) à au moins l'une desdites secondes parois latérales (18) dudit couvercle (14) ;
**caractérisé en ce que** ledit dispositif rotatif (130) est conçu pour tourner les boîtes (11) en continu pendant qu'elles se déplacent dans ladite direction d'avance (P) et pour déterminer, en coopération avec lesdits un ou plusieurs transporteurs (24, 25), une roto-translation desdites boîtes (11) dans ladite direction d'avance (P), ledit dispositif rotatif (130) comprenant un déviateur (131) à courroie, placé en travers par rapport à ladite direction d'avance (P), et lesdits un ou plusieurs transporteurs (24, 25) sont conçus pour venir en contact avec desdites boîtes (11) et pour les dévier dans une direction de mouvement (T) transversal par rapport à ladite direction d'avance (P), une unité d'entraînement (132) étant prévue pour entraîner ledit déviateur (131), pour le déplacer dans ladite direction de mouvement (T) et pour interrompre l'action d'entraînement une fois que chacune desdites boîtes (11) à atteint sa position finale.

2. Appareil selon la revendication 1, **caractérisée en ce que** ledit premier dispositif de fermeture (110) comprend au moins une première unité de liaison (111) aligné avec ladite direction d'avance (P) pour la liaison des premières parois latérales (15, 18) dudit couvercle (14) et dudit fond de récipient (13) et ledit second dispositif de fermeture (120) comprend au moins une seconde unité de liaison (121) aligné avec ladite direction d'avance (P) pour la liaison des secondes parois latérales (18) dudit couvercle (14) et dudit fond de récipient (13), afin de compléter la fermeture de chacune desdites boîtes (11).

3. Appareil selon la revendication 2, **caractérisée en ce que** l'au moins un dudit premier dispositif de fermeture (110) ou dudit second dispositif de fermeture (120) comprend une ou plusieurs paires de premières unités de liaison (111) et de secondes unité de liaison (121) respectives, situées dans une position opposée par rapport à ladite direction d'avance (P) et parallèles les unes aux autres.

4. Appareil selon n'importe laquelle des revendications précédentes, **caractérisé en ce qu'**il comprend une paire de transporteurs (25) agencés en paire et en parallèle dans ladite direction d'avance (P) et capables de faire avancer et supporter lesdites boîtes (11) pendant leur roto-translation.

5. Installation pour l'emballage d'objets en boîtes (11), comprenant au moins une ligne de production (20) pourvue d'un ou plusieurs postes de remplissage (21), dans lesquels les objets sont insérés dans les fond de récipient (13) desdites boîtes (11), **caractérisée en ce que**, le long de ladite ligne de production (20) et en aval desdits postes de remplissage (21), elle comprend au moins un appareil de fermeture (10) selon n'importe laquelle des revendications précédentes.

6. Procédé pour fermer des boîtes (11), chacune munie d'un fond de récipient (13) et d'un couvercle (14), comprenant l'avance dudit fond de récipient (13) et dudit couvercle (14) dans une direction d'avance (P), et au moins une première fermeture partiale de ladite boîte (11) pendant laquelle les premières parois latérales (15, 18) dudit fond de récipient (13) et dudit couvercle (14), orientées parallèles à la direction d'avance (P), sont reliées l'une à l'autre, dans lequel le procédé comprend une rotation de la boîte (11) effectué après ladite première fermeture partiale, pendant laquelle rotation les secondes parois latérales (15, 18) dudit fond de récipient (13) et dudit couvercle (14), en position adjacente et contiguë aux dites premières parois (15, 18), sont orientées parallèles à la direction d'avance (P), et une seconde fermeture de la boîte (11) effectuée en ligne dans la direction d'avance (P) et après ladite rotation afin de relier au moins une parties desdites secondes parois latérales (15,18) ;
**caractérisé en ce que** la rotation de la boîte (11) est effectuée en continu et en ligne avec la direction d'avance (P), pendant que la boîte (11) avance, pour déterminer une roto-translation de ladite boîte (11) dans ladite direction d'avance (P), la rotation de ladite boîte (11) étant effectuée pour translater au moins une partie avant (11a) de ladite boîte (11) par un déviateur à courroie (131) dans une direction de mouvement (T) transversale par rapport à ladite direction d'avance (P) et en même temps pour maintenir l'avance de ladite boîte (11) dans ladite direction d'avance (P) par un ou plusieurs transporteurs (24,25), l'action d'entraînement du déviateur (131) étant interrompue une fois que chacune desdites boîtes (11) a atteint sa position finale.

7. Procédé selon la revendication 6, **caractérisée en ce que** ladite première fermeture partiale comprend la liaison d'au moins une première paroi (18) dudit couvercle (14) à une première paroi (15) correspondante dudit fond de récipient (13), et **en ce que** ladite seconde fermeture comprend la liaison d'au moins une seconde paroi (18) dudit couvercle (14) à une seconde paroi correspondante (15) dudit fond de récipient (13).

8. Procédé selon la revendication 6 ou 7, **caractérisée en ce que** ladite rotation de ladite boîte (11) permet de combiner une rotation de ladite boîte (11) sur son propre plan de couche et une translation de ladite boîte (11) dans la direction d'avance (P).
